# EUROPEAN PATENT SPECIFICATION

(11) **EP 1 262 069 B1**
(45) Date of publication and mention of the grant of the patent: **04.06.2014**
(21) Application number: 01901598.1
(22) Date of filing: 15.01.2001
(51) Int. Cl.: G06Q 30/02, H04N 21/235, H04N 21/434, H04N 21/435, H04N 21/488, H04N 21/6543, H04N 21/81, H04N 21/236, H04N 21/2362, H04N 21/431

(54) **METHODS AND APPARATUS FOR BANNER INFORMATION DIGITAL TV SERVICE AND RECEIVERS THEREFORE**
VERFAHREN UND VORRICHTUNG FÜR EINEN DIGITAL-TV-DIENST ZUR BANNERINFORMATIONSANZEIGE UND EMPFÄNGER HIERFÜR
PROCEDES ET DISPOSITIF POUR SERVICE DE TV NUMERIQUE A BANDEROLES PUBLICITAIRES ET RECEPTEURS ASSOCIES

(30) Priority: 14.01.2000 US 176121 P; 12.01.2001 US 759721
(43) Date of publication of application: 04.12.2002
(73) Proprietor: Samsung Electronics Co., Ltd., Suwon-si, Gyeonggi-do, 443-742 (KR)
(72) Inventor: KIM, Yeong-Taeg, Milpitas, CA 95035 (US)
(74) Representative: Walaski, Jan Filip
(86) International application number: PCT/KR2001/000056
(87) International publication number: WO 2001/052544

(56) References cited:
- EP-A- 0 772 360
- EP-A- 0 810 789
- EP-A1- 0 554 577
- WO-A-99/30493
- WO-A-99/45702
- WO-A1-00/38428
- KR-A- 930 018 448
- KR-A- 19980 087 628
- US-A- 6 049 333

## Description

### Technical Field

This invention relates to digital television and video services, and more particularly, to a method and apparatus for providing a digital television service incorporating certain additional commercial information and providing receivers therefore.

### Background Art

Digital video and television broadcasts are well known in the art. Common digital video service networks which provide digital video and television broadcasts include digital cable TV, digital satellite TV, video-on demand, and terrestrial digital TV broadcasting systems. In each of these services a service operator broadcasts information to a multitude of end users in the form of digital television signals. These digital television signals are generally broadcast in the MPEG-2 format.

MPEG-2 is a well known standard which was adopted on November 4, 1994 by the ISO (International Organization for Standards) Motion Picture Experts Group (MPEG) for audio/video digital signal compression, configuration and transmission. TheMPEG-2 Standard allows for consistent and uniform digital video signal sampling, coding, transmission and reception throughout the world and is very well known in the art.

Through the known systems designed according to the MPEG-2 Standard (which is also known as International Standard ISO/IEC 13818-1), the packetizing, multiplexing, and, sending of coded bit streams of multiple programs may be accomplished. Here multiple programs, along with audio and video overlays may be transmitted by a service operator and received by an end user. Details of MPEG-2 Systems can be also found in the textbook, Digital Video: An-introduction to MPEG-2, Barry G. Haskell and et.al., Champman and Hall, New York, NY, USA, 1997.

Since the adoption of the MPEG-2 Standard, service networks have proliferated around the world which networks provide digital television programming to end users. These service networks generally consist of two (2) types of networks. The first type of service network describes digital video content distribution services such as digital cable TV service, digital satellite TV service, video-on-demand service where viewers pay monthly or per program service charges to the service operator.

The second type of service network describes terrestrial Digital TV broadcasting networks where users are not required to pay service charges for viewing the programs transmitted by the broadcasters. Typically, the main revenue of these broadcasters stem from commercial advertisements located between their programs. However, commercial advertisements located between regular scheduled programming frustrates end users who wish to view their chosen program from beginning to end without interruption. End users have recorded programs to so that they may re-play the programs with a minimum amount of interruption, and a large part of the driving force behind consumer usage of the first type of service network discussed above was to pay monthly or per program service charges in order to eliminate commercial interruption. Many end users desire alternative choices to either being forced to endure endless commercial interruption or pay for the privilege of eliminating the interruptions.

Furthermore, in each of these types of known systems, there is very limited end user interactivity.

During the past decade, a further industry has developed to produce "Infomercials" and wholesale channels solely dedicated to the sale of products and services. The Infomercials are generally extended advertisements which replace a regular entertainment style program instead of being an addendum or limited commercial between the regular programming. Infomercials generally contain information about a product or service which is being sold and requires that the user telephone the Infomercial producer to purchase the product or service.

The wholesale channels are television based catalogues of products and services which display the products for the viewer while the viewer calls for the products that they desire. Further types of commercials are well known in the art. However, none of the televised commercial advertisements provide interactivity where the user can interactively select the programs desired. Furthermore, none of the commercial programs provide any type of automatic notice to the viewer that the specific commercial programming is being broadcast at a particular time.

Additionally, none of the network services provide a system for determining the viewer's viewing habits and desires and then addressing those specific viewing habits by providing programming specifically addressed to the user.

Even further, none of the digital TV network services broadcast Background Commercials to the end user, for which the end user's permission is required, and none of the digital TV network services provide incentives or compensate the end user's for their viewing choices or viewing record.

Document WO99/45702 describes a method or providing targeted advertising in the form of text, graphics or video banners overlaying on a regular program or menu screen.

WO 00/38428 discloses that following the selection of an advertising the corresponding advertisement information is superimposed over a program or is stored for later retrieval.

### Disclosure of the Invention

Therefore, it is an object of the present invention to provide a digital television service network which provides an alternative programming scheme to subscription television or interrupted programming.

It is yet another object of the present invention to provide a digital television service network which provides automatic commercial programming simultaneously with regular programming.

It is yet still another object of the present invention to provide a digital television service network where the user pre-agrees with the Service Operator to allow commercial Banner Information to be simultaneously displayed with regular programming.

These, together with other objects of the present invention, along with the various features of novelty which characterize the present invention, are pointed out with particularity in the claims annexed to and forming a part of this disclosure.

The present invention provides, in a first aspect a digital video service network, comprising means for providing a combined digital signal, the combined digital signal having information reflective of a regular program signal and a Banner Information signal including Banner Information; a receiver for receiving the combined digital signal and a presentation unit for displaying the combined digital signal, the Banner Information being presented to the presentation unit with the regular program; and a channel communicating the combined digital signal from the means for providing a combined digital signal to the receiver characterised in that: the banner information signal further comprises additional audio-visual information, wherein the receiver notifies a user that the received Banner Information signal includes the additional audio-visual information; and in response to an input from the user, the audio-visual information is arranged to be viewed or stored for later viewing.

The above and other objects are achieved by the present invention, wherein the Service Operator (SO) of a digital television network provides certain commercial information to the end users along with regular programming and the end user has a receiver for reviewing the embedded commercial information along with the regular programming.

In a Banner Information preferred embodiment of the present invention, the Banner Information transmission is provided in an interactive digital television broadcast system wherein the digital television Service Operator (SO) transmits a signal over their digital television network. The Banner Information transmitted signal contains bitstreams of both regular TV programs and Banner Information. The Banner Information is intended for commercial advertisement. In this Banner Information preferred embodiment, the end user has a specialized digital TV Banner Information Receiver which allows the Banner Information transmitted by the Service Operator to partially occupy the end user's video presentation device.

In this Banner Information preferred embodiment of the present invention, the digital TV Banner Information Receiver includes a channel demodulator, a Transport Stream (TS) demultiplexer, audio and video decoders, a Banner depacketizer which depacketizes the Banner TS Packets carrying the coded Banner Information, a renderer which decodes and renders the coded Banner Information into a bitmap video signal, and a video output reconstruction unit which generates the output video signal with the rendered Banner Information and the decoded video output. The user's digital TV Banner Information Receiver receives the signal available in the channel, decodes, and delivers the regular TV programs to the user's presentation device and simultaneously decodes, renders, and presents the Banner Information to the user's video presentation device.

In one of the Banner Information embodiments of the present invention, which is more applicable to subscription TV services, but may be applied to non-subscription services as well, the end user obtains the digital TV Banner Information Receiver from the Service Operator based upon an agreement between the Service Operator and the end user whereby the end user agrees to allow the Banner Information transmitted by the Service Operator to partially occupy the user's video presentation device connected to the Digital TV Banner Information Receiver. In this embodiment the Service Operator may agree to eliminate or minimize the subscription or per program charges, or the Service Operator may simply provide the Digital TV Banner Information Receiver and related equipment free of charge.

The present invention provides, in a second aspect, a method of providing digital television programming to viewers, the method comprising the steps of:
creating a combined digital television signal which combines information reflective of regular programming and information reflective of a Banner information signal including Banner Information; transmitting the combined digital television signal over a channel; receiving the transmitted, combined digital television signal at a receiver; providing the received, combined digital television signal to a presentation unit such that the information reflective of the regular programming and the information reflective of the Banner Information are displayed simultaneously on the presentation unit; characterised in that the banner information signal further comprises additional audio-visual information, wherein the receiver notifies a user that the received Banner Information signal includes the additional audio-visual information; and in response to an input from the user, the audio-visual information is arranged to be viewed or stored for later viewing.

The present invention also allows for several Background Commercial preferred embodiments. In these Background Commercial preferred embodiments of the present invention, an interactive digital television broadcast system transmits Background Commercials in addition to regular scheduled programming to an end user, the end user selects whether, when and how it wishes to view the Background Commercials, and return information is communicated to the network service operator.

In the herein described Background Commercial preferred embodiments of the present invention, new Background Commercial digital television broadcast systems are described, which for purposes of this disclosure shall be named as the "View-to-Save service" and "View-for-Money service." These Background Commercial preferred embodiments are described in reference to the known digital video service networks described above including the digital cable TV, digital satellite TV, video-on demand, and terrestrial Digital TV broadcasting systems. However, neither the present invention nor the preferred embodiments should be limited to those specific networks.

In the Background Commercial preferred embodiments of the present invention, Background Commercials are encoded, packetized, and multiplexed with packetized bitstreams of regular programs within a transmitted MPEG-2 signal, and then transmitted to the end-users through one of the digital video service networks.

Background Commercials are commercial advertisement programs which requires a user's permission, or, request so that they may access a user's presentation unit. The end users receive the combined broadcast MPEG-2 signal, which includes both the normally broadcast digital video signal and the Background Commercials, through a receiver which is specifically designed to be used with the Background Commercial preferred embodiments of the present invention.

The receiver of these preferred embodiments of the present invention includes a switch whereby the end user can enable or disable receipt and display of the service function of the preferred embodiments of the present invention. Through this switch, the end user can thereby enable or disable the rendering and/or presentation process of Banner Information of the received Background Commercials so that the rendered Background Commercial Banner Information of the Background Commercials can or can't be presented at the end user's presentation device. Background Commercial Banner Information is information which is related to the Background Commercials broadcast, and which takes the form of text, graphics, and images associated with the content of the Background Commercials.

The Background Commercial preferred embodiments of the present invention allow the user to request to view the audio/video contents of the Background Commercials from the Receiver when the received Background Commercials has audio/video bit streams. Alternatively, the end user can request to save the audio/video bit streams of the Background Commercials and can view them later when viewing is more desirable or convenient. If the end user selects to save the audio/video bit streams for later viewing, the receiver then records the user's Background Commercials-viewing data in an associated storage unit.

In these preferred embodiments of the present invention, a return channel allows the user's viewing choices and other such information to be communicated back to the associated service operator. In exchange for, and based upon this returned information, i.e., the user's Background Commercials-viewing record and programming selections, the service operator can then provide benefits to the end user in the form of savings on monthly service charges if applicable, giving away pay-per-view broadcasts similar to the end user's previous viewing selections, giving commercial coupons for future savings, providing revenue sharing arrangements, etc.

The present invention provides, in a third aspect a receiver for an interactive digital video service network, the receiver comprising: means for receiving a combined digital signal, the combined digital signal having information reflective of a regular program and a banner information signal including Banner Information; means for decoding the combined digital signal and providing a first signal reflective of the regular program and a second signal reflective of the Banner Information; means for receiving the signal reflective of the at least one Background Commercial and providing a signal reflective of the Banner Information; and means for providing a video output signal, the means for providing the video output signal combining information from the signal reflective of the regular program and the signal reflective of the Banner Information; characterised in that: the banner information signal further comprises additional audio-visual information, wherein the receiver notifies a user that the received Banner Information signal includes the additional audio-visual information; and in response to an input from the user, the audio-visual information is arranged to be viewed or stored for later viewing.

This receiver embodiment may further comprise a User Interface means for obtaining User commands to enable or disable the inclusion of Background Commercial Banner Information in the video output signal and a control unit for providing control signals reflective of the User commands. This receiver embodiment may further comprise a storage means for storing Background Commercial view data and a transmission means for proving a return signal reflective of the Background Commercial view data.

A further Background Commercial preferred embodiment of a receiver for an receiver for an interactive digital video service network within the present invention comprises: means for receiving a digital signal, the digital signal having information reflective of a regular program and at least one Background Commercial, wherein the information reflective of the at least one Background Commercial contains Audio-Visual Information and Background Commercial Banner Information; means for decoding the digital signal and providing a first signal reflective of the regular program and a second signal reflective of the at least one Background Commercial; means for receiving the second signal reflective of the at least one Background Commercial and providing a first BC signal reflective of the Background Commercial Banner Information related to one of the at least one Background Commercials and a second BC signal reflective of Audio-Visual Information related to the one of the at least one Background Commercials; and means for providing a video output signal, the means for providing the video output signal combining information from one of (i) the signal reflective of the regular program or (ii) the second BC signal, with information from the signal reflective of the Background Commercial Banner Information. In this further receiver embodiment the means for receiving the signal reflective of the at least one Background Commercial provides a third BC signal reflective of information identifying the one of the at least one Background Commercials. This further receiver embodiment further comprises a selection means for allowing an end user to select between information from the signal reflective of the regular program and information from the second BC signal for inclusion in the video output signal. This further receiver embodiment also further comprises a User Interface means for obtaining User commands to enable or disable the inclusion of Background Commercial Banner Information and/or the second BC signal in the video output signal and a control unit for providing control signals reflective of the User commands. A storage means is included for storing Background Commercial view data and a transmission means for providing a return signal reflective of the Background Commercial view data. The same or a further storage means may be provided for storing information from the second BC signal, and means for replaying the second BC signal stored in the storage means to the means for providing a video output signal for inclusion in the video output signal. The same or a further storage means may also be provided for storing information from the signal reflective of the regular program, and means for replaying the signal reflective of the regular program stored in the storage means to the means for providing a video output signal for inclusion in the video output signal.

### Brief Description of the Drawings

The foregoing and other objects, advantages and features of the invention, and the manner in which the same are accomplished, will become more readily apparent upon consideration of the following detailed description of the preferred embodiment of the present invention taken in conjunction with the accompanying drawings which illustrate preferred and exemplary embodiments, and wherein:
**Figure 1** shows a basic block diagram of the View-to-Save service of the Background Commercial preferred embodiments of the present invention.
**Figure 2** shows a basic block diagram showing how the multiplexed bit streams of a regular program data and the data from Background Commercials are generated based on the MPEG-2 Systems for the Background Commercial preferred embodiments of the present invention.
**Figure 3** shows a basic block diagram of the "View-for-Money" service of the second Background Commercial preferred embodiment of the present invention which is provided for terrestrial, or land based digital TV networks.
**Figure 4** shows a basic block diagram of a first embodiment of a receiver for the View-to-Save and View-for-Money services of the first and second Background Commercial preferred embodiments, respectively, of the present invention.
**Figure 5** shows a basic block diagram of a second embodiment of a receiver for the View-to-Save and View-for-Money services of the first and second Background Commercial preferred embodiments, respectively, of the present invention.
**Figure 6** shows a basic block diagram of a third embodiment of a receiver for the View-to-Save and View-for-Money services of the first and second Background Commercial preferred embodiments, respectively, of the present invention.
**Figure 7** shows a basic block diagram showing how the multiplexed bit streams of a regular program data and the data from Banner Information are generated based on the MPEG-2 Systems for the Banner Information preferred embodiments of the present invention.
**Figure 8** shows a basic block diagram illustrating the functional architecture of the digital TV Banner Information Receiver of the first Banner Information preferred embodiment of the present invention.

### Best mode for carrying out the Invention

The following description is provided to enable any person skilled in the art to make and use the invention and sets forth the best modes presently contemplated by the inventors for carrying out this invention. Various modifications however, will remain readily apparent to those skilled in the art, since the generic principles of the present invention have been completely defined.

For a clear description of the preferred embodiment of the present invention, the following terminology is defined:
Banner Information is defined as contents in the forms of texts, graphics, images, or, any other type of audio visual information which is intended for commercial advertisement and can be presented to the user with any other type of digital television presentation.

Coded Banner Information is a coded bitstream of the Banner Information including all necessary information required for the proper rendering process at the end user's associated receiver. Examples of types of coding of the Banner Information include, but are not limited to, such processes as JPEG, HTML, Java applet, or any other type of bitstream coding process known in the art.

Banner TS Packet is a packetized bitstream of the Coded Banner Information based on the Transport Stream syntax of the international standard ISO/IEC 13818-1.

Rendering refers to the process which decodes and renders the Coded Banner Information into a bitmap video signal so that it can be presented to the end user's video presentation device.

Background Commercials are commercial advertisement programs which require a user's permission, or, request in order for them to access and be presented at the user's presentation unit. Conversely, if there is no permission or request from a user, then Background Commercials will not be presented at the user's presentation unit. Thus, unless the user desires to receive the Background Commercials, then the user will not be bothered by any Background Commercials while watching regular programs. Background Commercials, as defined herein, differ from typical commercial advertisements because a typical commercial advertisement is located between or in the middle of regular non-commercial programs. Whereas, Background Commercials can be available anytime, even when a regular program is displaying, i.e., the Background Commercials are carried in the background of the regular non-commercial.

Background Commercial Banner Information is information descriptive and/or related to the Background Commercials. Background Commercial Banner Information takes the form of text, graphics, and images which are associated with the content of the Background Commercials. Alternatively, Audio-Visual Information of a Background Commercials is the audio and video contents of the Background Commercials similar to typical commercial within regular TV programs. Hence, Background Commercials can have Background Commercial Banner Information and/or Audio-Visual Information.

### I. Banner Information Preferred Embodiments

The Banner Information preferred embodiments of the present invention allow for free digital TV service which is capable of delivering digital TV programs without imposing any service charge or which minimizes the service charge which the Service Operator bills to the end users. In a first Banner Information preferred embodiment of the present invention, the end users enter into an agreement with the Service Operator to allow the digital TV Service Operator (SO) to present commercial banner advertisements on the end user's video presentation devices. A specialized receiver is also provided for this service, and that receiver can be provided either by Service Operator or by the end user themself.

In the Banner Information preferred embodiments of the present invention, a Service Operator transmits a Banner Information signal over their digital television networks, such as cable or satellite networks. This Banner Information signal contains Transport Stream (TS) packets of coded bitstreams of regular TV programs and the Banner Information intended for commercial advertisement.

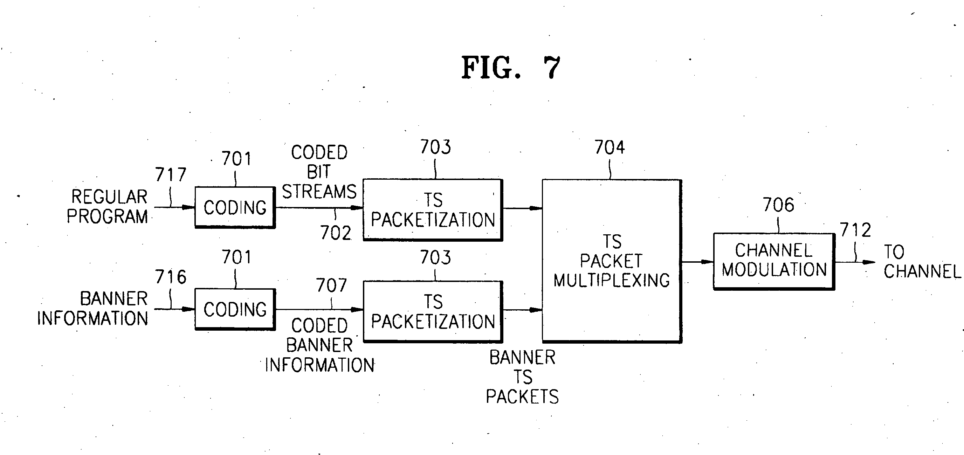

The coding of the regular TV programs and the Banner Information varies depending on the applications which are used. For instance, a video content of a regular program can be coded by using MPEG-2 video codec, an audio content of a program can be coded based on MPEG-2 audio codec or AC-3 codec, and the Banner Information can be coded by using JPEG, HTML, Java applet, or etc. In the Banner Information preferred embodiment of the present invention, the methods of generating, multiplexing, and sending TS packets containing the coded regular TV programs and the coded Banner Information implement an application of the MPEG-2 international standard ISO/IEC 13818-1. The coding of regular TV programs along with Banner Information is briefly illustrated in Figure 7.

Figure 7 shows a simplified block diagram illustrating how the TS packet stream is generated. For an explanation of TS packetization, refer to the TS syntax defined in the ISO/IEC 13818-1 Standard, known in the art.

As shown in Figure 7, each of the regular program signal 717 and the Banner Information signal 716 undergo a coding step 701 to create coded bit streams of regular program information 702 and coded Banner Information 707. Each of the coded bit streams 702, 707, reflecting the regular program signal 717 and the Banner Information 716, respectively, are then packetized 703 and fed to a Transport Stream packet multiplexer 704. The multiplexed transport stream is then modulated 706 and sent to the channel 712 for transmission to the end users.

As discussed above, in the first Banner Information preferred embodiment of the present invention, a digital TV Banner Information Receiver will be available to the end users who have entered into an agreement with the Service Operator whereby the Service Operator will send Banner Information to partially occupy the user's video presentation device connected to the digital TV Banner Information Receiver. Since the Service Operator can use this Banner Information to present commercial advertisements to the end users, and thereby obtain an alterative source of income, the Service Operator can provide alternative benefits to the end users; such as avoiding or minimizing subscription service charges.

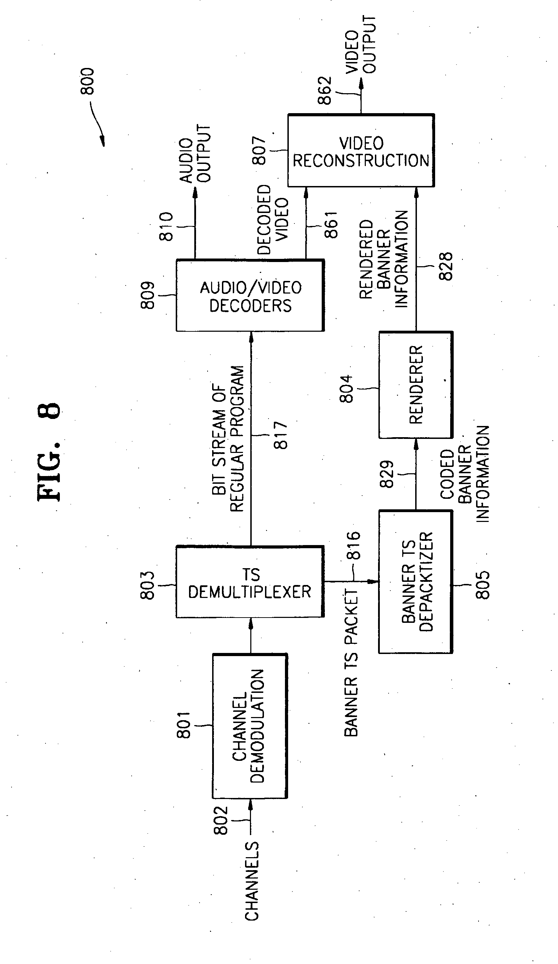

Once the end user has selected a channel or regular programming for viewing, the end user's digital TV Banner Information Receiver receives and demodulates the signal from the channel; decodes and delivers the regular TV programs to the user's presentation device, and also decodes, renders, and presents the Banner Information to the user's video presentation device. In the digital TV Banner Information Receiver of the first Banner Information preferred embodiment of the present invention shown in Figure 8, the receiver 800 is configured to render the Banner Information on the end user's visual presentation device. This embodiment provides a cost effective way of designing a receiver 800, and allows a Service Operator to implement the Banner Information preferred embodiment of the present invention.

The functional architecture of the digital TV Banner Information Receiver of the first Banner Information preferred embodiment of the present invention is illustrated in Figure 8. As shown in Figure 8, the digital TV Banner Information Receiver of the first Banner Information preferred embodiment includes a channel demodulation unit 801 which demodulates the received signal and extracts the bit streams of the regular program and the Banner Information from a user-tuned channel 802.

A TS demultiplexing unit 803 demultiplexes the regular program bitstream 817 (audio and video bit streams) and the Banner Information TS packets 816 which are received from the channel demodulation unit 801.

A Banner Information TS depacketizer 805 receives the Banner Information TS packets 816 from the TS demultiplexing unit 803, depacketizes the Banner Information TS packets 816 and gets the coded Banner Information 829 and sends the depacketized, coded Banner Information 829 to a Rendering Unit 804. The Rendering Unit 804 decodes and renders the coded Banner Information into a bitmap video signal 828 and sends the rendered Banner Information bitmap video signal 828 to a video reconstruction unit 807 to present to the user's presentation device.

Audio/Video decoders 809 receives the regular program bitstream 817 (audio and video bit streams), decodes the audio and video coded bit streams of the regular program 817 and sends an Audio output signal 810 for transducing into sound and a decoded video signal 861 to the video reconstruction unit 807. The video reconstruction unit 807 reconstructs the output video 862 from the decoded video output 861 and the rendered Banner Information 828, and sends a combined video output signal 862 to the end user's video presentation device for display where the regular program and the Banner Information are displayed simultaneously.

### II. Background Commercial Preferred Embodiments

The Background Commercial preferred embodiments of the present invention described herein below are segregated between two (2) different types of services. The first service applies to digital video content distribution services such as digital cable TV service, digital satellite TV service, video-on-demand service, and is described as the "View-to-Save" broadcast service. The second service provided by the Background Commercial preferred embodiments for terrestrial Digital TV broadcasting networks is herein called and defined as the "View-for-Money" service. The names of those services are intended merely for easy description of the Background Commercial preferred embodiments of the present invention and should not be construed to limit the scope of the invention in any way.

### View-to-Save Service : A Service for Digital Cable TV, Digital Satellite TV, and Video-on-Demand Service Networks.

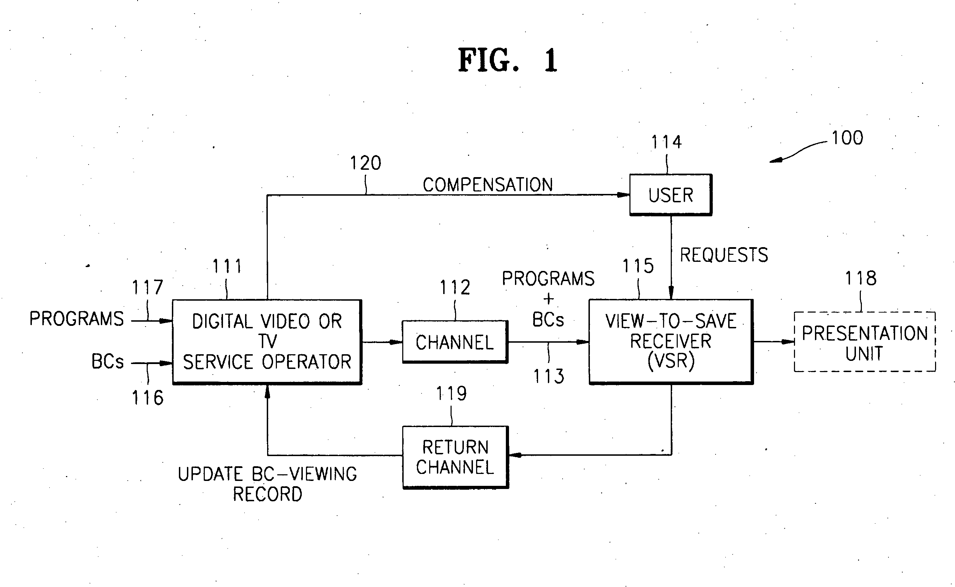

Turning now to the drawings, Figure 1 shows a basic block diagram of the View-to-Save system 100 of the Background Commercial preferred embodiments of the present invention. In this View-to-Save system 100, a digital video or TV service operator 111 transmits a combined MPEG-2 signal 113 over a channel 112 to receiver 115 of the end users 114. Within the transmitted combined MPEG-2 signal 113, Background Commercials 116 are encoded, packetized, multiplexed along with packetized bit streams of regular programs 117.

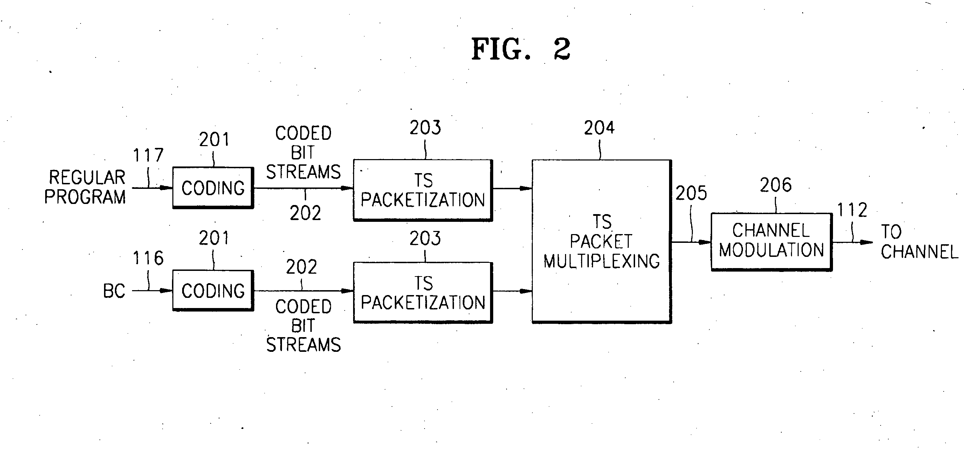

The methods of packetizing, multiplexing, and, sending coded bit streams of multiple programs are well known in the art, and they generally implement the International Standard ISO/IEC 13818-1 which is also known as MPEG-2 Systems. A simplified illustration showing the multiplexing of bit streams of regular program data along with the data from Background Commercials based on the MPEG-2 Systems is depicted in Figure 2. In the signals illustrated within Figure 2, the Transport Stream which is specified in the MPEG-2 Standard is composed of a *header* followed by a *payload.*

As shown in Figure 2, each of the regular program signal 117 and the Background Commercials 116 undergo a coding step 201 to create coded bit streams 202. Each of the coded bit streams 202, reflecting the regular program signal 117 and the Background Commercials 116, are then packetized 203 and fed to a multiplexer 204. The multiplexed transport stream is then modulated 206 and sent to the channel.112.

The actual structure and operation of the View-to-Save receiver ("VSR") of the Background Commercial preferred embodiment of the present invention is described in more detail below. However, referring back to Figure 1, the VSR 115 receives the signal 113 from the channel 112, demodulates the signal 113 to retrieve the bit streams of the regular programs 117 and the Background Commercials 116, and then extracts the bit streams of the regular programs 117 and the Background Commercials 116. The regular programs 117 are normally decoded and delivered to a presentation unit 118 without any alteration if the View-to-Save service function of the receiver 115 has been disabled by the user 114.

When a user 114 requests the View-to-Save service or, in other words, if the user 114 enables the View-to-Save service function of the Receiver 115, the Background Commercials 116 are presented to the presentation unit118.

Various options also can be made possible in delivering the Background Commercials 116 to the user's presentation unit 118 depending on the type of the Background Commercials 116 received. If the received Background Commercials 116 contain only Background Commercial Banner Information, then the rendered Background Commercial Banner Information is overlaid to the video output of the regular programs 117. If the received Background Commercials 116 contain Audio-Visual Information in addition to the Background Commercial Banner Information, then the VSR 115 notifies the user 114 that the received Background Commercials 116 have additional Audio-Visual Information while the rendered Background Commercial Banner Information is delivered to the presentation unit 118.

Based upon this notification, the user 114 will decide whether to view the additional Audio-Visual Information of the Background Commercials 116. If the user 114 decides to view the additional Audio-Visual Information of the Background Commercials 116, then the audio and video streams of the Background Commercials 116 are decoded and presented to the user's presentation unit 118. Alternatively, the user 114 can also request the VSR 115 to store the bit streams of the additional Audio-Visual Information of the Background Commercials 116 for later viewing. In other words, the bit streams of the Background Commercials 116 that the user 114 requests to store will be stored in a digital storage device such as a hard disk drive or other type of digital storage memory device. The stored Audio-Visual Information of the Background Commercials 116 can then be decoded and presented to the user's presentation unit 118 when the user 114 requests to view the stored Background Commercials 116.

In the Background Commercial preferred embodiment of the invention, bit streams of multiple Background Commercials 116 can be stored in the storage device of the VSR 115, and Background Commercial Banner Information from the multiple Background Commercials 116 can be presented to the user's presentation unit 118 when the View-to-Save service function is enabled by the user 114. When there are multiple Background Commercials available, the VSR 115 of the Background Commercial preferred embodiment of the invention decodes and presents the Audio-Visual Information of the Background Commercials 116 that the user 114 selects to the presentation unit 118.

While all these transactions are made, the receiver 115 records data reflective of the user's Background Commercials 116 viewing habits and choices to an internal memory device. Fundamentally, this process will record which Background Commercials 116 were presented at the user's presentation unit 118 by the user's request. Any information which is interesting for future management of the View-to-Save service by the service operator 111 can be pre-specified and recorded when the user's Background Commercials-viewing data is recorded. Such information can be, but is not limited to, the date or time stamp reflecting when the Background Commercials 116 were presented to the presentation unit 118, channel information such as channel number, program identification of the regular programs 117 that the user 114 was watching when the Background Commercials 116 were requested to be presented to the user's presentation unit 118, identification which Background Commercials 116 were chosen, their running time, etc. The View-to-Save service embodiment illustrated in Figure 1 then undertakes a process of sending the user's Background Commercials-viewing data back to the service operator 111 through a return channel 119. For management purposes, unique identifications may be assigned to each user 114 or each VSR 115. Depending upon how the VSR 115 is designed, the VSR 115 can send the user's Background Commercials-viewing record to the service operator 111 at the user's request, or at a request or time which has been previously programmed internally in the VSR 115. Upon receiving the user's Background Commercials-viewing record, the service operator 111 is able to then update and manage the users' Background Commercials-viewing records.

The final process of the View-to-Save service embodiment illustrated in Figure 1 is that the service operator 111 is able to provide certain benefits to the user 114 in return for the user's participation in the View-to-Save service of the Background Commercial preferred embodiment of the present invention. These benefits may take various forms as a function of the user's Background Commercials-viewing record. Examples include, but are not limited to, savings on monthly service charges, if applicable, giving away free pay-per-views programs which the user 114 would normally have to pay for, giving commercial coupons for saving, providing some sot of revenue sharing package, or other type of compensation and incentive for participating in the service. For purposes of illustration, this return of compensation from the service operator 111 to the user 114 is shown as arrow 120 in Figure 1.

### View-for-Money Service: A Service for Terrestrial Digital TV Networks

The View-to-Save service of the first Background Commercial preferred embodiment of the present invention shown in Figure 2 is mostly suitable for the digital video or digital TV service networks in which a service operator 111 broadcasts digital video contents over their networks having multiple channels such as digital cable TV networks, video-on-demand networks, and satellite digital video service networks. In such service networks, users 114 are subject to monthly service charges from the service operator 111.

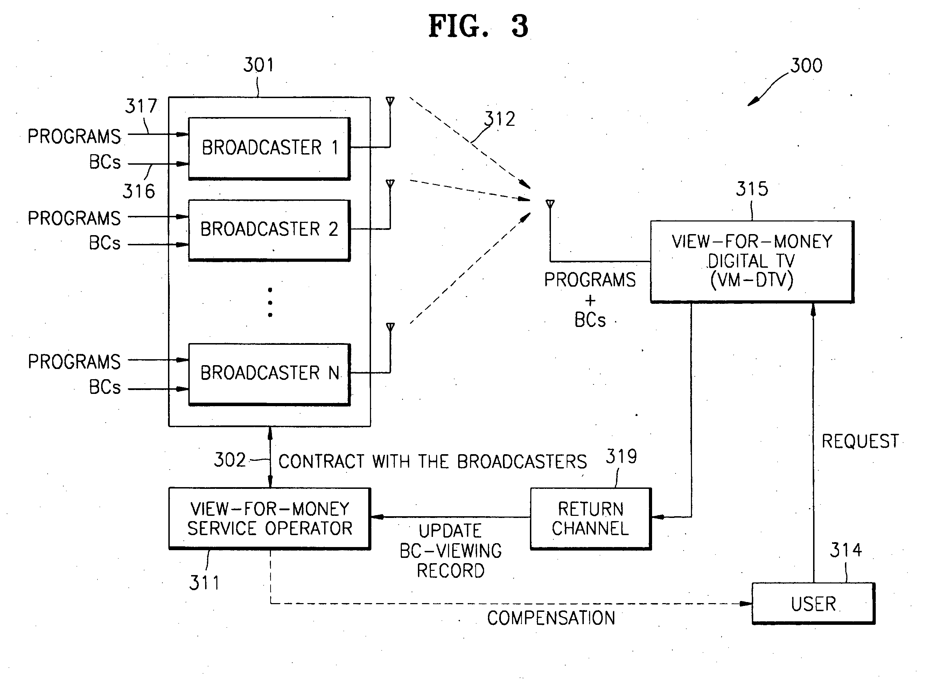

Alternatively, Figure 3 illustrates a second Background Commercial preferred embodiment of the present invention which is herein called the "View-for-Money service" and is provided for terrestrial, or land based digital TV networks where users are not required to pay service charges for viewing the programs transmitted by the broadcasters. Typically, the main revenue of these broadcasters stem from commercial advertisements located between their programs.

In the View-for-Money service 300 illustrated in the second Background Commercial preferred embodiment of the present invention, the broadcasters broadcast Background Commercials 316 with their respective regular programs 317 to the air where a specific channel 312 or frequency range is assigned to each broadcaster. The View-for-Money Digital TV (VM-DTV) 315, which controls the View-for-Money service of the second Background Commercial preferred embodiment for the user 314, receives the signals available in the air, and extracts the bitstreams of the regular programs 317 and the Background Commercials 316 of the tuned channel 312.

The next function of the View-for-Money service of the second Background Commercial preferred embodiment of the present invention is same as that described for the View-to-Save service in the first Background Commercial preferred embodiment of the invention described above. The regular programs are normally decoded and delivered to the presentation unit without any alteration if the View-for-Money service function has been disabled by the user 314. Alternatively, when a user 314.requests access to the View-for-Money service, or if the user enables the View-for-Money service function on the VM-DTV 315, then the Background Commercials 316 are presented at a presentation unit connected to the VM-DTV 315.

When the View-for-Money service is to be received by the user, if the received Background Commercials 316 contain only Background Commercial Banner Information, then the rendered Background Commercial Banner Information is overlaid to the video output of the regular programs 317. Alternatively, if the received Background Commercials 316 contains further Audio-Visual information in addition to the Background Commercial Banner Information, then the VM-DTV 315 notifies the user 314 that the received Background Commercials 316 contain additional Audio-Visual information while the rendered Background Commercial Banner Information of the Background Commercials 316 is delivered to the user 314.

Based upon this notification, that the Background Commercials 316 contain additional Audio-Visual information, the user 314 may further request the VM-DTV 315 to display the Audio-Visual information at that time. If the user 314 requests to view the additional Audio-Visual information of the Background Commercials 316, then the audio and video streams of the Background Commercials 316 are decoded and presented to the user's presentation unit.

Alternatively, the user 314 can request the VM-DTV 315 to store the bitstreams of the additional Audio-Visual information of the Background Commercials 316 for later viewing. In other words, some bitstreams of the Background Commercials 316 that the user selects can be stored in a digital storage device such as a hard disk drive or other digital memory, and they will then be decoded and presented to the user's presentation unit when the user requests to view the stored Background Commercials 316 at a later time.

Bitstreams of multiple Background Commercials 316 can be stored in the storage device of the VM-DTV 315, and multiple Background Commercial Banner Information signals can be presented to the user's presentation unit when that service function is enabled. If there is Background Commercial Banner Information from multiple Background Commercials 316 being presented to the user 314, then the VM-DTV 315 decodes and presents the additional Audio-Visual information of the Background Commercials 316 which the user selects.

As discussed above with respect to the first Background Commercial preferred embodiment of the present invention, while all of these transactions are being made by the user 314, the VM-DTV 315 records all of the user's Background Commercials-viewing data to the internal memory device of the VM-DTV 315. Fundamentally, this process is to record which Background Commercials 316 were presented at the user's presentation unit by the user's request.

Any desired information for the proper management of the View-for-Money service by the broadcasters 301 and/or View-for-Money service operator (VM-SO) 311 can be pre-specified and used when the user's Background Commercials-viewing data is recorded. Such information can be, but is not limited to, the date or time stamp of when the Background Commercials 316 were selected or viewed, channel information such as the channel number or the broadcaster's identification, the program identification that the user was watching when the Background Commercials were requested to be presented to the user's presentation unit, identification of the a Background Commercials selected, its running time, etc.

As discussed above with respect to the first Background Commercial preferred embodiment of the present invention, the View-for-Money service 300 of the second Background Commercial preferred embodiment of the present invention further implements a process which sends the user's Background Commercials-viewing record to the VM-SO 311 through a return channel 319. For proper management of the service, a unique identification is assigned to each user 314 or to each VM-DTV 315. Depending upon the design of the VM-DTV 315, the VM-DTV 315 sends the user's Background Commercials-viewing record to the VM-SO 311 at the user's request, or based upon an instruction programmed internally within the VM-DTV 315.

Upon receiving the user's Background Commercials-viewing record, the VM-SO 311 updates and manages the user's Background Commercials-viewing record. In the View-for-Money service Network 300 of the second Background Commercial preferred embodiment of the present invention, it is important that the VM-SO 311 and each broadcaster 301 sending Background Commercials have some sort of contract regarding the Background Commercials 316 transmitted to the user 314, or that they have some other means for directing incentives and/or interactive responsiveness to the user 314 based upon the user's Background Commercials-viewing records. The contract 302 can take various forms, i.e., charging the broadcasters for the Background Commercials 316 that they transmitted, or for the Background Commercials 316 which were selected for viewing at the users' presentation devices.

Based upon the users' Background Commercials-viewing records, the final process of the View-for-Money service 300 of the second Background Commercial preferred embodiment of the present invention is that the VM-SO 311 compensates or otherwise provides incentives or other interactive input based upon the users' Background Commercials-viewing records. A simple example of compensation includes, but is not limited to, revenue sharing with the user 314 from the VM-SO 311 for profits arising from the View-for-Money service with those users 314 who viewed the Background Commercials 316.

### The View-to-Save and View-for-Money Receivers

The difference between the View-to-Save service 100 and the View-for-Money service 300 of the first and second Background Commercial preferred embodiment of the present invention discussed above, is how the digital contents (regular programs plus Background Commercials) are delivered to the end users. For the View-to-Save service 100, a service operator 111 sends and manages digital contents (regular programs 117 and Background Commercials116) for the entire channel, i.e., all of the broadcasters of their networks (cable and satellite), whereas separate broadcasters 301 transmit each of their digital contents to the air, or to the users 314 for the View-for-Money service 300.

In terms of functionality for performing these novel interactive services, however the VSR 115 and VM-DTV 315 require basically the same functions: receive digital bit streams, extract and deliver the Background Commercial Banner Information of a Background Commercials to the user's presentation device if a user enables the service function, decode and present the Audio-Visual Information of the Background Commercials at the user's request, record and manage the user's Background Commercials-viewing data, and update the user's Background Commercials-viewing record to the service operator via a return channel.

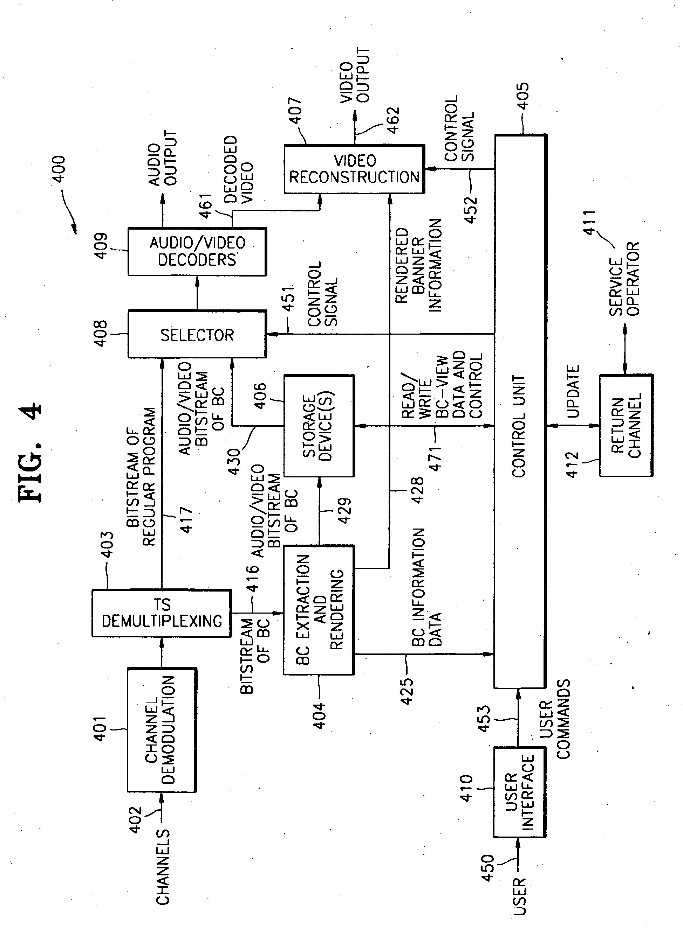

Referring now to Figure 4, a first embodiment of the receiver 400 for View-to-Save service 100 and the View-for-Money service 300 includes a channel demodulation unit 401 which demodulates the received signal and extracts the bit streams of the regular program and the Background Commercials from a user-tuned channel 402.

A TS demultiplexing and depacketization unit 403 demultiplexes the program bitstream 417 (audio and video bit streams) and the Background Commercials bit streams 416 which are received from the channel demodulation unit 401.

A Background Commercials extraction and rendering unit 404 extracts and renders the Background Commercial Banner Information 428 of the received Background Commercials, sends Background Commercials information data 425 to a control unit 405 for managing purposes, sends audio/video bit streams 429 of the Background Commercials to a storage device 406 to save, and, sends the rendered Background Commercial Banner Information 428 to a video reconstruction unit 407 to present to the user's presentation device.

The storage device(s) 406, may be a hard drive or any other type of digital storage device, saves audio/video bit streams of a Background Commercials 429 and the user's Background Commercials-viewing record. A selector unit 408 selects between the audio/video bit streams of the regular program 417 and the audio/video bit streams of the Background Commercials 429 stored in the storage device 406 in accordance with the control signal 451 from the control unit 405. The control unit 405 couples to the User interface 410 to obtain the user's command 453 to view the Audio-Visual Information of the Background Commercials received 429.

Audio/Video decoders 409 decode the selected audio and video coded bit streams 430 and send a decoded video signal 461 to the video reconstruction unit 407. The video reconstruction unit 407 reconstructs the output video 462 from the decoded video output 461 and the rendered Background Commercial Banner Information 428 in accordance with the control signal 452 from the control unit 405.

The control unit 405 also obtains the user's commands 453 to enable/disable the service function, i.e., if the user enables the View-to-Save or View-for-Money service function, as the case may be.

As stated above, the Video Reconstruction unit 407 generates the output video signal 462 from the decoded video 461 and the rendered Background Commercial Banner Information 428. If the user disables the service function, then the Video Reconstruction unit 407 generates the output video signal 462 only with the decoded video 461.

The Control unit 405 receives and interprets the user's commands 453, receives the Background Commercials information data 425 from the Background Commercials extraction and rendering unit 404, controls the storage device(s) 406 to save the audio/video bit streams 429 to the storage device(s) 406, records the user's Background Commercials-viewing data 471 to the storage device(s) 406, controls the selector unit 408 and the storage device(s) 406 to send the saved audio/video bit streams of the Background Commercials 429 previously stored in the storage device(s) 406 to the Audio/Video decoders 409 in accordance with the user's request to view the Audio-Visual Information of the Background Commercials received, and reads and manages the user's Background Commercials-viewing record 471 from the storage device(s) 406 and then sends that Background Commercials-viewing record 471 to the service operator 411 through a return channel 412.

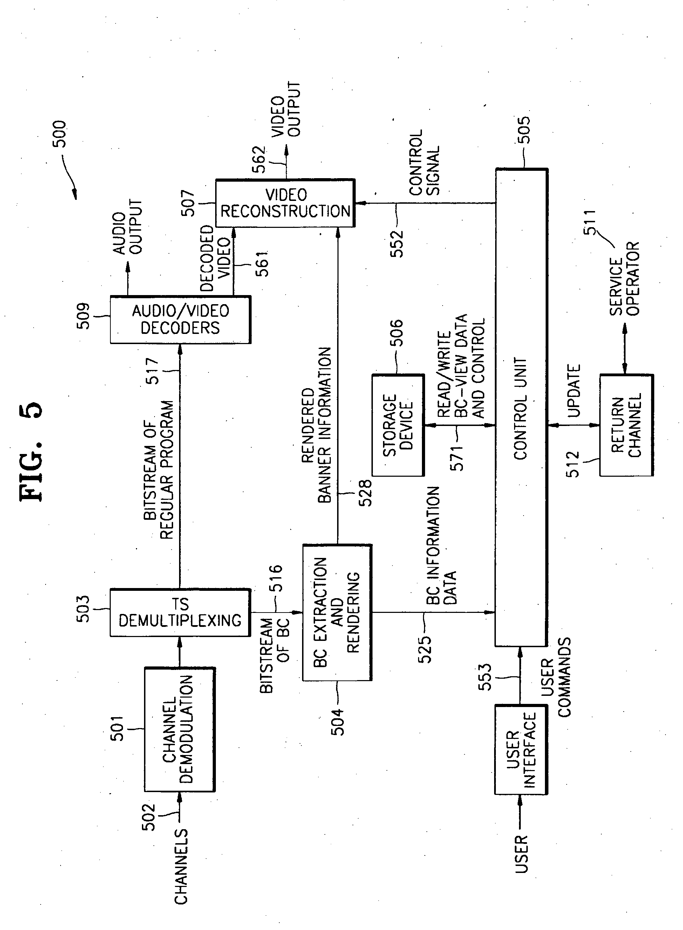

Depending on applications, a receiver may be limited so that it is only capable of presenting Background Commercial Banner Information to the users. Figure 5 shows a basic block diagram of a second embodiment of a receiver for the View-to-Save and View-for-Money services of the first and second Background Commercial preferred embodiments, respectively, of the present invention. In this second embodiment of the receiver for View-to-Save and View-for-Money services, the receiver 500 is configured to render only the Background Commercial Banner Information of Background Commercials, i.e., no feature for further decoding and presenting of the Audio-Visual Information of the Background Commercials is provided. This embodiment provides a cost effective way of designing the receiver 500. In this embodiment of the receiver 500 each of the components operate in a similar manner to the receiver 400 illustrated in Figure 4.

Referring now to Figure 5, a second embodiment of the receiver 500 for the View-to-Save service 100 and the View-for-Money service 300 includes a channel demodulation unit 501 which demodulates the received signal and extracts the bit streams of the regular program and the Background Commercials from a user-tuned channel 502.

A TS demultiplexing and depacketization unit 503 demultiplexes the program bitstream 517 (audio and video bit streams) and the Background Commercials bit streams 516 which are received from the channel demodulation unit 501.

A Background Commercials extraction and rendering unit 504 extracts and renders the Background Commercial Banner Information 528 of the received Background Commercials, sends Background Commercials information data 525 to a control unit 505 for managing purposes, and, sends the rendered Background Commercial Banner Information 528 to a video reconstruction unit 507 to present to the user's presentation device.

Audio/Video decoders 509 decode the selected audio and video coded bit streams of the regular program 517 and send a decoded video signal 561 to the video reconstruction unit 507. The video reconstruction unit 507 reconstructs the output video 562 from the decoded video output 561 and the rendered Background Commercial Banner Information 528 in accordance with the control signal 552 from the control unit 505.

The control unit 505 also obtains the user's commands 553 to enable/disable the service function, i.e., if the user enables the View-to-Save or View-for-Money service function, as the case may be.

As stated above, the Video Reconstruction unit 507 generates the output video signal 562 from the decoded video 561 and the rendered Background Commercial Banner Information 528. If the user disables the service function, then the Video Reconstruction unit 507 generates the output video signal 562 only with the decoded video 561.

The Control unit 505 receives and interprets the user's commands 553, receives the Background Commercials information data 525 from the Background Commercials extraction and rendering unit 504, controls the storage device(s) 506 to record the user's Background Commercials-viewing data 571 to the storage device(s) 506, and reads and manages the user's Background Commercials-viewing record 571 from the storage device(s) 506 and then sends that Background Commercials-viewing record 571 to the service operator 511 through a return channel 512.

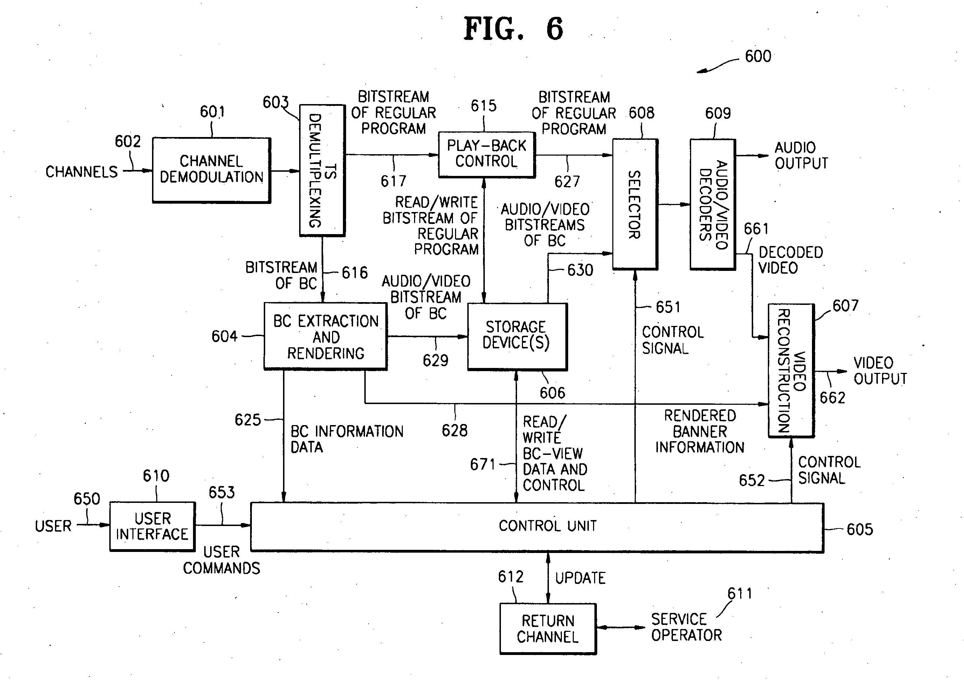

Figure 6 illustrates a third embodiment of a receiver 600 with the feature that a user can continuously watch a regular program after the user has delayed that regular program so that the user could watch either stored or currently transmitted Audio-Visual Information of Background Commercials. This third embodiment of the receiver 600 addresses potential discontinuity in the user's watching of regular programing while a user views the Audio-Visual Information of Background Commercials by saving the bit streams of the regular programs 617 in a storage device(s) 606. Those regular program bit streams 617 can then be played back after the user viewed the Audio-Visual Information of a Background Commercials.

The third embodiment of the receiver 600 displayed in Figure 6 operates in a very similar manner to the receiver 400 depicted in Figure 4. However, the receiver 600 also includes a play-back control unit 615 which controls the bitstream flow between the TS Demultiplex unit 603 and the selector unit 608.

During normal operation, the play-back control unit 615 delivers the regular program bitstream 617 directly from the TS Demultiplexing unit 603 to the selector unit 608. Alternatively, if the user 650 requests that the audio/video bit streams of the Background Commercials 629 be played, then the control unit 605 sends a control signal 651 to the selector unit 608. The selector unit 608 then feeds the audio/video bit streams of the Background Commercials 629 from the storage device(s) 606 to the Audio/Video decoders 609 instead of the regular program bitstream 617. Similarly, when the audio/video bit streams of a Background Commercials 629 are being decoded by the Audio/Video decoders 609, the play-back control unit 615 directs the bit streams of regular program 617 coming from the TS Demultiplex unit to the storage device to be saved. This is all controlled from the control unit 605 sending a control signal 651 to the selector unit 608.

After the user 650 has finished viewing the Audio-Visual Information of the Background Commercials 629, the play-back control unit 615 sends the saved bitstream of the regular program 617 from the storage device(s) 606 to the selector unit 608. In this way, the user 650 can continuously watch the regular program and start it again right at the spot where it was paused when the user 650 began to view the Audio-Visual Information of the Background Commercials 629.

Referring still to Figure 6, a first embodiment of the receiver 600 for View-to-Save service 100 and the View-for-Money service 300 includes a channel demodulation unit 601 which demodulates the received signal and extracts the bit streams of the regular program and the Background Commercials from a user-tuned channel 602.

A TS demultiplexing and depacketization unit 603 demultiplexes the program bitstream 617 (audio and video bit streams) and the Background Commercials bit streams 616 which are received from the channel demodulation unit 601.

A Background Commercials extraction and rendering unit 604 extracts and renders the Background Commercial Banner Information 628 of the received Background Commercials, sends Background Commercials information data 625 to a control unit 605 for managing purposes, sends audio/video bit streams 629 of the Background Commercials to a storage device 606 to save, and, sends the rendered Background Commercial Banner Information 628 to a video reconstruction unit 607 to present to the user's presentation device.

The storage device(s) 606, may be a hard drive or any other type of digital storage device, saves audio/video bit streams of a Background Commercials 629 and the user's Background Commercials-viewing record. A selector unit 608 selects between the audio/video bit streams of the regular program 627 and the audio/video bit streams of the Background Commercials 629 stored in the storage device 606 in accordance with the control signal 651 from the control unit 605. The control unit 605 couples to the User interface 610 to obtain the user's command 653 to view the Audio-Visual Information of the Background Commercials received 629.

Audio/Video decoders 609 decode the selected audio and video coded bit streams 630 and send a decoded video signal 661 to the video reconstruction unit 607. The video reconstruction unit 607 reconstructs the output video 662 from the decoded video output 661 and the rendered Background Commercial Banner Information 628 in accordance with the control signal 652 from the control unit 605.

The control unit 605 also obtains the user's commands 653 to enable/disable the service function, i.e., if the user enables the View-to-Save or View-for-Money service function, as the case may be.

As stated above, the Video Reconstruction unit 607 generates the output video signal 662 from the decoded video 661 and the rendered Background Commercial Banner Information 628. If the user disables the service function, then the Video Reconstruction unit 607 generates the output video signal 662 only with the decoded video 661.

In addition to controlling the selection, storage and play back of the regular program bit streams 617 and the Audio/video Background Commercials bitstreams, the Control unit 605 also receives and interprets the user's commands 653, receives the Background Commercials information data 625 from the Background Commercials extraction and rendering unit 604, controls the storage device(s) 606 to save the audio/video bitstreams 629 to the storage device(s) 606, records the user's Background Commercials-viewing data 671 to the storage device(s) 606, controls the selector unit 608 and the storage device(s) 606 to send the saved audio/video bitstreams of the Background Commercials 629 previously stored in the storage device(s) 606 to the Audio/Video decoders 609 in accordance with the user's request to view the Audio-Visual Information of the Background Commercials received, and reads and manages the user's Background Commercials-viewing record 671 from the storage device(s) 606 and then sends that Background Commercials-viewing record 671 to the service operator 611 through a return channel 612.

Accordingly, it will be understood that the Background Commercial preferred embodiment of the present invention have been disclosed by way of example and that other modifications and alterations may occur to those skilled in the art without departing from the scope and spirit of the appended claims.

Those skilled in the art will appreciate the various adaptations and modifications of the just described preferred embodiments can be configured without departing from the scope of the invention. Therefore, it is to be understood that, within the scope of the appended claims, the invention may be practiced other than as specifically described herein.

### Industrial Applicability

This invention relates to a method and apparatus for providing a digital television service incorporating certain additional commercial information and providing receivers therefore. Accordingly, a digital TV Banner Information Receiver will be available to the end users who have entered into an agreement with the Service Operator whereby the Service Operator will send Banner Information to partially occupy the user's video presentation device connected to the digital TV Banner Information Receiver. Since the Service Operator can use this Banner Information to present commercial advertisements to the end users, and thereby obtain an alterative source of income, the Service Operator can provide alternative benefits to the end users, such as avoiding or minimizing subscription service charges.

## Claims

1. A digital video service network, comprising:
means for providing a combined digital signal, the combined digital signal having information reflective of a regular program signal (117; 317) and a Banner Information signal including Banner Information (116; 316)
a receiver for receiving the combined digital signal and a presentation unit for displaying the combined digital signal; and
**characterised in that**:
if the received banner information signal contains only banner information, the receiver (115; 315) is arranged to present the banner information to the presentation unit with the regular program; and
if the received banner information signal contains banner information and additional audio-visual information, the receiver is arranged to present the banner information to the presentation unit with the regular program and notify a user that the received Banner Information signal includes additional audio-visual information, and in response to an input from the user, the audio-visual information is arranged to be viewed or stored for later viewing.

2. The network of claim 1, wherein the means for providing creates a Transport Stream (TS) packetized combined digital signal.

3. The network of claim 1, wherein the means for providing a combined digital signal further comprises
a first coding unit for coding the regular program signal and a second coding unit for coding the Banner Information signal,
a first TS packetization unit for receiving the coded regular program signal and providing a packetized bit stream reflecting the coded regular program signal and a second TS packetization unit for receiving the coded Banner Information signal and providing a packetized bit stream reflecting the coded Banner Information signal,
a TS Packet multiplexer for receiving the packetized regular program signal and the packetized Banner Information signal and providing a multiplexed transport stream, and
a channel modulation unit for modulating the transport stream into the combined digital signal and sending the combined digital signal for transmission to the receiver.

4. The network of claim 1, wherein the receiver (115; 315) further comprises
channel demodulation unit (401) for demodulating the received combined digital signal and extracting bit streams of the regular program signal and the Banner Information signal from a user-tuned channel,
a TS demultiplexing unit (403) for demultiplexing the regular program bitstream and Banner Information TS packets from the signal received from the channel demodulation unit,
a Banner Information TS depacketizer for receiving the Banner Information TS packets from the TS demultiplexing unit and depacketizing the Banner Information TS packets to provide a coded Banner Information signal,
a Rendering Unit (404) for decoding and rendering the coded Banner Information into a bitmap video signal,
a video reconstruction unit (407) for receiving the rendered Banner Information bitmap video signal and creating an output for the presentation device,
Audio/Video decoders (409) for receiving the regular program bitstream from the TS demultiplexing unit, the Audio/Video decoders decoding audio and video coded bit streams of the regular program signal, the Audio/Video decoders (409) sending an Audio output signal for transducing into sound and a decoded video signal to the video reconstruction unit (407), the video reconstruction unit reconstructing an output video signal from the decoded video output and the rendered Banner Information bitmap video signal, the video reconstruction unit (407) sending the video output signal to the video presentation device for display where the regular program and the Banner Information are displayed simultaneously.

5. The network of claim 1, wherein the receiver (115; 315) further comprises
a channel demodulation unit (401) for demodulating the received combined digital signal and extracting bit streams of the regular program signal and the Banner Information signal from a user-tuned channel, and
a TS demultiplexing unit (403) for demultiplexing the regular program bitstream and Banner Information TS packets from the signal received from the channel demodulation unit.

6. The network of claim 3, wherein the receiver (115; 315) further comprises a
Banner Information TS depacketizer for receiving the Banner Information TS packets from the TS demultiplexing unit and depacketizing the Banner Information TS packets to provide a coded Banner Information signal, and
a Rendering Unit for decoding and rendering the coded Banner Information into a bitmap video signal.

7. The network of claim 3, wherein the receiver (115; 315) further comprises
Audio/Video decoders (409) for receiving the regular program bitstream from the TS demultiplexing unit (403), the Audio/Video decoders decoding audio and video coded bit streams of the regular program signal, the Audio/Video decoders sending an Audio output signal for transducing into sound and a decoded video signal to a video reconstruction unit, the video reconstruction unit (407) reconstructing an output video signal from the decoded video output and a rendered Banner Information bitmap video signal, the video reconstruction unit (407) sending the video output signal to the video presentation device for display where the regular program and the Banner Information are displayed simultaneously.

8. A method of providing digital television programming to viewers, the method comprising the steps of:
creating a combined digital television signal which combines information reflective of regular programming (117; 317) and information reflective of a Banner information signal including Banner Information (116; 316);
transmitting the combined digital television signal over a channel;
receiving the transmitted, combined digital television signal at a receiver (115; 315);
;
**characterised in that**:
if the received banner information signal contains only information reflective of the banner information, the receiver (115; 315) is arranged to provide the received, combined digital television signal to a presentation unit such that the information reflective of the regular programming and the information reflective of the banner information are displayed simultaneously on the presentation unit, and
if the received banner information signal contains information reflective of banner information and additional audio-visual information, the receiver is arranged to to provide the received, combined digital television signal to a presentation unit and notify a user that the received Banner Information signal includes additional audio-visual information, and in response to an input from the user, the audio-visual information is arranged to be viewed or stored for later viewing.

9. The method of claim 8, further comprising the steps of:
demodulating the received combined digital signal and extracting bit streams of a regular program signal and a Banner Information signal from a user-tuned channel; demultiplexing the regular program bitstream and Banner Information TS packets from the demodulated signal;
depacketizing the Banner Information TS packets to provide a coded Banner Information signal;
decoding the coded Banner Information; and
rendering the coded Banner Information into a bitmap video signal.

10. The method of claim 8, further comprising the steps of:
demodulating the received combined digital signal and extracting bit streams of a regular program signal and a Banner Information signal from a user-tuned channel;
demultiplexing the regular program bit stream and Banner Information TS packets from the demodulated signal;
decoding audio and video coded bit streams of the regular program signal;
sending an audio output signal for transducing into sound;
reconstructing an output video signal from the decoded video output and a signal reflective of the Banner Information signal; and
sending the output video signal to the video presentation device for display where the regular program and the Banner Information are displayed simultaneously.

11. The method of claim 8, wherein the step of creating the combined digital signal further comprises the steps of:
coding a regular program signal and coding a Banner Information signal;
packetizing the coded regular program signal and providing a packetized bit stream reflecting the coded regular program signal;
packetizing the coded Banner Information signal and providing a packetized bit stream reflecting the coded Banner Information signal;
providing a multiplexed transport stream from the packetized regular program signal and the packetized Banner Information signal ; and
modulating the transport stream into the combined digital signal and sending the combined digital signal for transmission to the channel.

12. A receiver (115; 315) for an interactive digital video service network, the receiver comprising:
means for receiving a combined digital signal, the combined digital signal having information reflective of a regular program and a banner information signal including Banner Information;
means for decoding (409) the combined digital signal and providing a first signal reflective of the regular program and a second signal reflective of the Banner Information;
means for receiving the signal reflective of the at least one Background Commercial and providing a signal reflective of the Banner Information; and
means for providing a video output signal, the means for providing the video output signal combining information from the signal reflective of the regular program and the signal reflective of the Banner Information;
**characterised in that**:
if the received banner information signal contains only banner information, the receiver (115; 315) is arranged to present the banner information with the regular program simultaneously, and
if the received banner information signal contains banner information and additional audio-visual information, the receiver is arranged to present the banner information with the regular program simultaneously and notify a user that the received Banner Information signal includes additional audio-visual information, and in response to an input from the user, the audio-visual information is arranged to be viewed or stored for later viewing.

13. The receiver of claim 12, further comprising
a channel demodulation unit (401) for demodulating the received combined digital signal and extracting bit streams of the regular program signal and the Banner Information signal from a user-tuned channel,
a TS demultiplexing unit (403) for demultiplexing the regular program bitstream and Banner Information TS packets from the signal received from the channel demodulation unit,
a Banner Information TS depacketizer for receiving the Banner Information TS packets from the TS demultiplexing unit and depacketizing the Banner Information TS packets to provide a coded Banner Information signal,
a Rendering Unit (404) for decoding and rendering the coded Banner Information into a bitmap video signal, a video reconstruction unit (407) for receiving the rendered Banner Information bitmap video signal and creating an output for a video presentation device,
Audio/Video decoders (409) for receiving the regular program bitstream from the TS demultiplexing unit, the Audio/Video decoders decoding audio and video coded bit streams of the regular program signal, theAudio/Video decoders sending an Audio output signal for transducing into sound and a decoded video signal to the video reconstruction unit, the video reconstruction unit reconstructing an output video signal from the decoded video output and the rendered Banner Information bitmap video signal, the video reconstruction unit sending the video output signal to the video presentation device for display where the regular program and the Banner Information are displayed simultaneously.

14. The receiver of claim 12, further comprising
a channel demodulation unit (401) for demodulating the received combined digital signal and extracting bit streams of the regular program signal and the Banner Information signal from a user-tuned channel, and
a TS demultiplexing unit (403) for demultiplexing the regular program bitstream and Banner Information TS packets from the signal received from the channel demodulation unit.

15. The receiver of claim 12, further comprising
a Banner Information TS depacketizer for receiving the Banner Information TS packets from the TS demultiplexing unit and depacketizing the Banner Information TS packets to provide a coded Banner Information signal, and
a Rendering Unit (404) for decoding and rendering the coded Banner Information into a bitmap video signal.

16. The receiver of claim 12, further comprising
Audio/Video decoders (409) for receiving the regular program bitstream from the TS demultiplexing unit, the Audio/Video decoders decoding audio and video coded bit streams of the regular program signal, the Audio/Video decoders (409) sending an Audio output signal for transducing into sound and a decoded video signal to a video reconstruction unit (407), the video reconstruction unit (407) reconstructing an output video signal from the decoded video output and a rendered Banner Information bitmap video signal, the video reconstruction unit sending the video output signal to the video presentation device for display where the regular program and the Banner Information are displayed simultaneously.

## Patentansprüche

1. Digitales Videodienstnetz, umfassend:
Mittel zum Bereitstellen eines kombinierten digitalen Signals, wobei das kombinierte digitale Signal ein Signal einer regulären Sendung (117; 317) widerspiegelnde Informationen und ein Bannerinformationssignal mit Bannerinformationen (116; 316) hat,
einen Empfänger zum Empfangen des kombinierten digitalen Signals und eine Präsentationseinheit zur Anzeige des kombinierten digitalen Signals, und
**dadurch gekennzeichnet, dass**:
der Empfänger (115; 315) angeordnet ist, um, wenn das empfangene Bannerinformationssignal nur Bannerinformationen enthält, der Präsentationseinheit die Bannerinformationen mit der regulären Sendung zu präsentieren, und
der Empfänger angeordnet ist, um, wenn das empfangene Bannerinformationssignal Bannerinformationen und zusätzliche audiovisuelle Informationen enthält, der Präsentationseinheit die Bannerinformationen mit der regulären Sendung zu präsentieren und einen Benutzer zu benachrichtigen, dass das empfangene Bannerinformationssignal zusätzliche audiovisuelle Informationen beinhaltet, und die audiovisuellen Informationen, als Reaktion auf eine Eingabe vom Benutzer, zum Ansehen oder zum Speichern zum späteren Ansehen angeordnet werden.

2. Netz nach Anspruch 1, wobei das Mittel zum Bereitstellen ein Transportstrom-(TS)-paketiertes kombiniertes digitales Signal erstellt.

3. Netz nach Anspruch 1, wobei das Mittel zum Bereitstellen eines kombinierten digitalen Signals ferner Folgendes aufweist:
eine erste Kodiereinheit zum Kodieren des Signals der regulären Sendung und eine zweite Kodiereinheit zum Kodieren des Bannerinformationssignals,
eine erste TS-Paketierungseinheit zur Aufnahme des kodierten Signals der regulären Sendung und zum Bereitstellen eines paketierten Bitstroms, der das kodierte Signal der regulären Sendung widerspiegelt, und eine zweite TS-Paketierungseinheit zum Empfangen des kodierten Bannerinformationssignals und zum Bereitstellen eines paketierten Bitstroms, der das kodierte Bannerinformationssignal widerspiegelt,
einen TS-Paket-Multiplexer zum Empfangen des paketierten Signals der regulären Sendung und des paketierten Bannerinformationssignals und zum Bereitstellen eines multiplexierten Transportstroms und
eine Kanalmodulationseinheit zum Modulieren des Transportstroms in das kombinierte digitale Signal und zum Senden des kombinierten digitalen Signals zur Übertragung zum Empfänger.

4. Netz nach Anspruch 1, wobei der Empfänger (115; 315) ferner Folgendes aufweist:
eine Kanaldemodulationseinheit (401) zum Demodulieren des empfangenen kombinierten digitalen Signals und Entnehmen von Bitströmen des Signals der regulären Sendung und des Bannerinformationssignals aus einem benutzerabgestimmten Kanal,
eine TS-Demultiplex-Einheit (403) zum Demultiplexen des Bitstroms der regulären Sendung und der Bannerinformations-TS-Pakete aus dem von der Kanaldemodulationseinheit empfangenen Signal,
einen Bannerinformations-TS-Zerleger zum Empfangen der Bannerinformations-TS-Pakete von der TS-Demultiplex-Einheit und zum Zerlegen der Bannerinformations-TS-Pakete, um ein kodiertes Bannerinformationssignal bereitzustellen,
eine Rendering-Einheit (404) zum Dekodieren und Rendern der kodierten Bannerinformationen zu einem Bitmap-Videosignal,
eine Videorekonstruktionseinheit (407) zum Empfangen des gerenderten Bitmap-Videosignals der Bannerinformationen und Erstellen eines Ausgangs für die Präsentationsvorrichtung,
Audio/Video-Dekodierer (409) zum Empfangen des Bitstreams der regulären Sendung von der TS-Demultiplex-Einheit, wobei die Audio/Video-Dekodierer audio- und videokodierte Bitströme des Signals der regulären Sendung dekodieren, wobei die Audio/Video-Dekodierer (409) ein Audioausgangssignal zum Umsetzen in Ton und ein dekodiertes Videosignal an die Videorekonstruktionseinheit (407) senden, wobei die Videorekonstruktionseinheit aus dem dekodierten Videoausgang und dem gerenderten Bitmap-Videosignal der Bannerinformationen ein Ausgangsvideosignal rekonstruiert, wobei die Videorekonstruktionseinheit (407) das Videoausgangssignal zur Anzeige an die Videopräsentationsvorrichtung sendet, wo die reguläre Sendung und die Bannerinformationen gleichzeitig angezeigt werden.

5. Netz nach Anspruch 1, wobei der Empfänger (115; 315) ferner Folgendes aufweist:
eine Kanaldemodulationseinheit (401) zum Demodulieren des empfangenen kombinierten digitalen Signals und zum Entnehmen von Bitstreams des Signals der regulären Sendung und des Bannerinformationssignals aus einem benutzerabgestimmten Kanal und
eine TS-Demultiplexeinheit (403) zum Demultiplexen des Bitstreams der regulären Sendung und der Bannerinformations-TS-Pakete aus dem von der Kanaldemodulationseinheit empfangenen Signal.

6. Netz nach Anspruch 3, wobei der Empfänger (115; 315) ferner Folgendes aufweist:
einen Bannerinformations-TS-Zerleger zum Empfangen der Bannerinformations-TS-Pakete von der TS-Demultiplex-Einheit und zum Zerlegen der Bannerinformations-TS-Pakete, um ein kodiertes Bannerinformationssignal bereitzustellen, und
eine Renderingeinheit zum Dekodieren und Rendern der kodierten Bannerinformationen zu einem Bitmap-Videosignal.

7. Netz nach Anspruch 3, wobei der Empfänger (115; 315) ferner Folgendes aufweist:
Audio/Video-Dekodierer (409) zum Empfangen des Bitstreams der regulären Sendung von der TS-Demultiplex-Einheit (403), wobei die Audio/Video-Dekodierer audio- und videokodierte Bitströme des Signals der regulären Sendung dekodieren, wobei die Audio/Video-Dekodierer ein Audioausgangssignal zum Umsetzen in Ton und ein dekodiertes Videosignal an eine Videorekonstruktionseinheit senden, wobei die Videorekonstruktionseinheit (407) aus dem dekodierten Videoausgang und einem gerenderten Bitmap-Videosignal der Bannerinformationen ein Ausgangsvideosignal rekonstruiert, wobei die Videorekonstruktionseinheit (407) das Videoausgangssignal zur Anzeige an die Videopräsentationsvorrichtung sendet, wo die reguläre Sendung und die Bannerinformationen gleichzeitig angezeigt werden.

8. Verfahren zum Bereitstellen von digitalen Fernsehsendungsinhalten für ein Publikum, wobei das Verfahren die folgenden Schritte umfasst:
Erstellen eines kombinierten digitalen Fernsehsignals, das reguläre Sendungsinhalte (117; 317) widerspiegelnde Informationen und ein Bannerinformationssignal widerspiegelnde Informationen mit Bannerinformationen (116; 316) kombiniert,
Übertragen des kombinierten digitalen Fernsehsignals über einen Kanal,
Empfangen des übertragenen, kombinierten digitalen Fernsehsignals an einen Empfänger (115, 315),
**dadurch gekennzeichnet, dass**
der Empfänger (115; 315) angeordnet ist, um, wenn das empfangene Bannerinformationssignal nur die Bannerinformationen widerspiegelnde Informationen enthält, das empfangene kombinierte digitale Fernsehsignal an eine Präsentationseinheit anzulegen, so dass die die regulären Sendungsinhalte widerspiegelnden Informationen und die die Bannerinformationen widerspiegelnden Informationen gleichzeitig an der Präsentationseinheit angezeigt werden, und
der Empfänger angeordnet ist, um, wenn das empfangene Bannerinformationssignal Bannerinformationen widerspiegelnde Informationen und zusätzliche audiovisuelle Informationen enthält, das empfangene kombinierte digitale Fernsehsignal an eine Präsentationseinheit anzulegen und einen Benutzer zu benachrichtigen, dass das empfangene Bannerinformationssignal zusätzliche audiovisuelle Informationen beinhaltet, und die audiovisuellen Informationen, als Reaktion auf eine Eingabe vom Benutzer, zum Ansehen oder zum Speichern zum späteren Ansehen angeordnet werden.

9. Verfahren nach Anspruch 8, das ferner die folgenden Schritte aufweist:
Demodulieren des empfangenen kombinierten digitalen Signals und Entnehmen von Bitströmen eines Signals einer regulären Sendung und eines Bannerinformationssignals aus einem benutzerabgestimmten Kanal,
Demultiplexen des Bitstroms der regulären Sendung und der Bannerinformations-TS-Pakete aus dem demodulierten Signal,
Zerlegen der Bannerinformations-TS-Pakete, um ein kodiertes Bannerinformationssignal bereitzustellen,
Dekodieren der kodierten Bannerinformationen und
Rendern der kodierten Bannerinformationen zu einem Bitmap-Videosignal.

10. Verfahren nach Anspruch 8, das ferner die folgenden Schritte aufweist:
Demodulieren des empfangenen kombinierten digitalen Signals und Entnehmen von Bitströmen eines Signals einer regulären Sendung und eines Bannerinformationssignals aus einem benutzerabgestimmten Kanal,
Demultiplexen des Bitstroms der regulären Sendung und der Bannerinformations-TS-Pakete aus dem demodulierten Signal,
Dekodieren von audio- und videokodierten Bitströmen des Signals der regulären Sendung,
Senden eines Audioausgangssignals zum Umsetzen in Ton,
Rekonstruieren eines Ausgangsvideosignals aus dem dekodierten Videoausgang und einem das Bannerinformationssignal widerspiegelnden Signal und
Senden des Ausgangsvideosignals zur Anzeige an die Videopräsentationsvorrichtung, wo die reguläre Sendung und die Bannerinformationen gleichzeitig angezeigt werden.

11. Verfahren nach Anspruch 8, wobei der Schritt des Erstellens des kombinierten digitalen Signals ferner die folgenden Schritte aufweist:
Kodieren eines Signals der regulären Sendung und Kodieren eines Bannerinformationssignals,
Paketieren des kodierten Signals der regulären Sendung und Bereitstellen eines das kodierte Signal der regulären Sendung widerspiegelnden paketierten Bitstroms,
Paketieren des kodierten Bannerinformationssignals und Bereitstellen eines das kodierte Bannerinformationssignal widerspiegelnden paketierten Bitstroms,
Bereitstellen eines multiplexierten Transportstroms aus dem paketierten Signal der regulären Sendung und dem paketierten Bannerinformationssignal und
Modulieren des Transportstroms in ein kombiniertes digitales Signal und Senden des kombinierten digitalen Signals zur Übertragung an den Kanal.

12. Empfänger (115; 315) für ein interaktives digitales Videodienstnetz, wobei der Empfänger Folgendes aufweist:
Mittel zum Empfangen eines kombinierten digitalen Signals, wobei das kombinierte digitale Signal eine reguläre Sendung widerspiegelnde Informationen und ein Bannerinformationssignal mit Bannerinformationen hat,
Mittel zum Dekodieren (409) des kombinierten digitalen Signals und Bereitstellen eines ersten, die reguläre Sendung widerspiegelnden Signals und eines zweiten, die Bannerinformationen widerspiegelnden Signals,
Mittel zum Empfangen des die wenigstens eine Hintergrundwerbung widerspiegelnden Signals und Bereitstellen eines die Bannerinformationen widerspiegelnden Signals und
Mittel zum Bereitstellen eines Videoausgangssignals, wobei das Mittel zum Bereitstellen des Videoausgangssignals Informationen aus dem die reguläre Sendung widerspiegelnden Signal und dem die Bannerinformationen widerspiegelnden Signal kombiniert,
**dadurch gekennzeichnet, dass**
der Empfänger (115; 315) angeordnet ist, um, wenn das empfangene Bannerinformationssignal nur Bannerinformationen enthält, die Bannerinformationen gleichzeitig mit der regulären Sendung zu präsentieren, und
der Empfänger angeordnet ist, um, wenn das empfangene Bannerinformationssignal Bannerinformationen und zusätzliche audiovisuelle Informationen enthält, die Bannerinformationen gleichzeitig mit der regulären Sendung zu präsentieren und einen Benutzer zu benachrichtigen, dass das empfangene Bannerinformationssignal zusätzliche audiovisuelle Informationen beinhaltet, und die audiovisuellen Informationen, als Reaktion auf eine Eingabe vom Benutzer, zum Ansehen oder zum Speichern zum späteren Ansehen angeordnet werden.

13. Empfänger nach Anspruch 12, der ferner Folgendes aufweist:
eine Kanaldemodulationseinheit (401) zum Demodulieren des empfangenen kombinierten digitalen Signals und Entnehmen von Bitströmen des Signals der regulären Sendung und des Bannerinformationssignals aus einem benutzerabgestimmten Kanal,
eine TS-Demultiplex-Einheit (403) zum Demultiplexen des Bitstroms der regulären Sendung und der Bannerinformations-TS-Pakete aus dem von der Kanaldemodulationseinheit empfangenen Signal,
einen Bannerinformations-TS-Zerleger zum Empfangen der Bannerinformations-TS-Pakete von der TS-Demultiplex-Einheit und zum Zerlegen der Bannerinformations-TS-Pakete, um ein kodiertes Bannerinformationssignal bereitzustellen,
eine Rendering-Einheit (404) zum Dekodieren und Rendern der kodierten Bannerinformationen zu einem Bitmap-Videosignal, eine Videorekonstruktionseinheit (407) zum Empfangen des gerenderten Bitmap-Videosignals der Bannerinformationen und Erstellen eines Ausgangs für eine Videopräsentationsvorrichtung,
Audio/Video-Dekodierer (409) zum Empfangen des Bitstreams der regulären Sendung von der TS-Demultiplex-Einheit, wobei die Audio/Video-Dekodierer audio- und videokodierte Bitströme des Signals der regulären Sendung dekodieren, wobei die Audio/Video-Dekodierer ein Audioausgangssignal zum Umsetzen in Ton und ein dekodiertes Videosignal an die Videorekonstruktionseinheit senden, wobei die Videorekonstruktionseinheit aus dem dekodierten Videoausgang und dem gerenderten Bitmap-Videosignal der Bannerinformationen ein Ausgangsvideosignal rekonstruiert, wobei die Videorekonstruktionseinheit das Videoausgangssignal zur Anzeige an die Videopräsentationsvorrichtung sendet, wo die reguläre Sendung und die Bannerinformationen gleichzeitig angezeigt werden.

14. Empfänger nach Anspruch 12, der ferner Folgendes aufweist:
eine Kanaldemodulationseinheit (401) zum Demodulieren des empfangenen kombinierten digitalen Signals und Entnehmen von Bitströmen des Signals der regulären Sendung und des Bannerinformationssignals aus einem benutzerabgestimmten Kanal und
eine TS-Demultiplex-Einheit (403) zum Demultiplexen des Bitstroms der regulären Sendung und der Bannerinformations-TS-Pakete aus dem von der Kanaldemodulationseinheit empfangenen Signal.

15. Empfänger nach Anspruch 12, der ferner Folgendes aufweist:
einen Bannerinformations-TS-Zerleger zum Empfangen der Bannerinformations-TS-Pakete von der TS-Demultiplex-Einheit und zum Zerlegen der Bannerinformations-TS-Pakete, um ein kodiertes Bannerinformationssignal bereitzustellen, und
eine Rendering-Einheit (404) zum Dekodieren und Rendern der kodierten Bannerinformationen zu einem Bitmap-Videosignal.

16. Empfänger nach Anspruch 12, der ferner Folgendes aufweist:
Audio/Video-Dekodierer (409) zum Empfangen des Bitstreams der regulären Sendung von der TS-Demultiplex-Einheit, wobei die Audio/Video-Dekodierer audio- und videokodierte Bitströme des Signals der regulären Sendung dekodieren, wobei die Audio/Video-Dekodierer (409) ein Audioausgangssignal zum Umsetzen in Ton und ein dekodiertes Videosignal an eine Videorekonstruktionseinheit (407) senden, wobei die Videorekonstruktionseinheit (407) aus dem dekodierten Videoausgang und einem gerenderten Bitmap-Videosignal der Bannerinformationen ein Ausgangsvideosignal rekonstruiert, wobei die Videorekonstruktionseinheit das Videoausgangssignal zur Anzeige an die Videopräsentationsvorrichtung sendet, wo die reguläre Sendung und die Bannerinformationen gleichzeitig angezeigt werden.

## Revendications

1. Réseau de services vidéo numériques, comprenant :
des moyens pour fournir un signal numérique combiné, le signal numérique combiné possédant des informations qui reflètent un signal de programme régulier (117 ; 317) et un signal d'informations de bannières publicitaires incluant des informations de bannières publicitaires (116 ; 316) ;
un récepteur pour recevoir le signal numérique combiné et une unité de présentation pour afficher le signal numérique combiné ; et
**caractérisé en ce que** :
si le signal d'informations de bannières publicitaires ayant été reçu contient uniquement des informations de bannières publicitaires, le récepteur (115 ; 315) est agencé de façon à présenter les informations de bannières publicitaires sur l'unité de présentation avec le programme régulier ; et
si le signal d'informations de bannières publicitaires ayant été reçu contient des informations de bannières publicitaires, ainsi que des informations audiovisuelles additionnelles, le récepteur est agencé de façon à présenter les informations de bannières publicitaires sur l'unité de présentation avec le programme régulier, et à notifier un utilisateur du fait que le signal d'informations de bannières publicitaires reçu inclut des informations audiovisuelles additionnelles, et en réaction à une saisie effectuée par l'utilisateur, les informations audiovisuelles sont agencées de façon à être visualisées, ou stockées en vue d'une visualisation ultérieure.

2. Réseau selon la revendication 1, les moyens de fourniture créant un signal numérique combiné paquétisé en format Transport Stream (flux de transport, TS).

3. Réseau selon la revendication 1, les moyens pour fournir un signal numérique combiné comprenant en outre :
une première unité de codage pour coder le signal de programme régulier et une deuxième unité de codage pour coder le signal d'informations de bannières publicitaires,
une première unité de paquétisation TS pour recevoir le signal de programme régulier codé et pour fournir un flux binaire paquétisé qui reflète le signal de programme régulier codé, et une deuxième unité de paquétisation TS pour recevoir le signal d'informations de bannières publicitaires codées et pour fournir un flux binaire paquétisé qui reflète le signal d'informations de bannières publicitaires codées,
un multiplexeur de paquets TS pour recevoir le signal de programme régulier paquétisé et le signal d'informations de bannières publicitaires paquétisé, et pour fournir un flux de transport multiplexé, et
une unité de modulation de canal pour moduler le flux de transport en signal numérique combiné, et pour envoyer le signal numérique combiné en vue d'une transmission vers le récepteur.

4. Réseau selon la revendication 1, le récepteur (115 ; 315) comprenant en outre :
une unité de démodulation de canal (401) pour démoduler le signal numérique combiné ayant été reçu, et pour extraire des flux binaires du signal de programme régulier et du signal d'informations de bannières publicitaires à partir d'un canal réglé par l'utilisateur,
une unité de démultiplexage TS (403) pour démultiplexer le flux binaire de programme régulier et des paquets TS d'informations de bannières publicitaires à partir du signal ayant été reçu de l'unité de démodulation de canal,
un dépaqueteur TS d'informations de bannières publicitaires pour recevoir les paquets TS d'informations de bannières publicitaires en provenance de l'unité de démultiplexage TS, et pour dépaqueter les paquets TS d'informations de bannières publicitaires afin de fournir un signal d'informations de bannières publicitaires codées,
une unité de rendu (404) pour assurer le décodage et le rendu des informations de bannières publicitaires codées en un signal vidéo en mode point (bitmap).
une unité de reconstruction vidéo (407) pour recevoir le signal vidéo en mode point (bitmap) des informations de bannières publicitaires rendues, et pour créer une sortie destinée au dispositif de présentation,
des décodeurs audio/vidéo (409) pour recevoir le flux binaire de programme régulier en provenance de l'unité de démultiplexage TS, les décodeurs audio/vidéo assurant le décodage de flux binaires codés audio et vidéo du signal de programme régulier, les décodeurs audio/vidéo (409) envoyant un signal de sortie audio en vue d'une transduction en son ainsi qu'un signal vidéo décodé à l'unité de reconstruction vidéo (407), l'unité de reconstruction vidéo reconstruisant un signal vidéo de sortie à partir de la sortie vidéo décodée, et le signal vidéo en mode point (bitmap) des informations de bannières publicitaires rendues, l'unité de reconstruction vidéo (407) envoyant le signal de sortie vidéo au dispositif de présentation vidéo à des fins d'affichage, où le programme régulier et les informations de bannières publicitaires sont affichés simultanément.

5. Réseau selon la revendication 1, le récepteur (115 ; 315) comprenant en outre :
une unité de démodulation de canal (401) pour démoduler le signal numérique combiné ayant été reçu, et pour extraire des flux binaires du signal de programme régulier et du signal d'informations de bannières publicitaires à partir d'un canal réglé par l'utilisateur, et
une unité de démultiplexage TS (403) pour démultiplexer le flux binaire de programme régulier et des paquets TS d'informations de bannières publicitaires à partir du signal ayant été reçu de l'unité de démodulation de canal.

6. Réseau selon la revendication 3, le récepteur (115 ; 315) comprenant en outre :
un dépaqueteur TS d'informations de bannières publicitaires pour recevoir les paquets TS d'informations de bannières publicitaires en provenance de l'unité de démultiplexage TS, et pour dépaqueter les paquets TS d'informations de bannières publicitaires afin de fournir un signal d'informations de bannières publicitaires codées, et
une unité de rendu pour assurer le décodage et le rendu des informations de bannières publicitaires codées en un signal vidéo en mode point (bitmap).

7. Réseau selon la revendication 3, le récepteur (115 ; 315) comprenant en outre :
des décodeurs audio/vidéo (409) pour recevoir le flux binaire de programme régulier en provenance de l'unité de démultiplexage TS (403), les décodeurs audio/vidéo assurant le décodage de flux binaires codés audio et vidéo du signal de programme régulier, les décodeurs audio/vidéo envoyant un signal de sortie audio en vue d'une transduction en son ainsi qu'un signal vidéo décodé à une unité de reconstruction vidéo, l'unité de reconstruction vidéo (407) reconstruisant un signal vidéo de sortie à partir de la sortie vidéo décodée, et un signal vidéo en mode point (bitmap) d'informations de bannières publicitaires rendues, l'unité de reconstruction vidéo (407) envoyant le signal de sortie vidéo au dispositif de présentation vidéo à des fins d'affichage, où le programme régulier et les informations de bannières publicitaires sont affichés simultanément.

8. Procédé destiné à fournir une programmation de télévision numérique à des téléspectateurs, le procédé comprenant les étapes consistant à :
créer un signal de télévision numérique combiné qui combine des informations qui reflètent une programmation régulière (117 ; 317) et des informations qui reflètent un signal d'informations de bannières publicitaires incluant des informations de bannières publicitaires (116 ; 316) ;
transmettre le signal de télévision numérique combiné sur un canal ;
recevoir le signal de télévision numérique combiné, ayant été transmis, au niveau d'un récepteur (115 ; 315) ;
**caractérisé en ce que** :
si le signal d'informations de bannières publicitaires ayant été reçu contient uniquement des informations qui reflètent les informations de bannières publicitaires, le récepteur (115 ; 315) est agencé de façon à fournir le signal de télévision numérique combiné, ayant été reçu, à une unité de présentation de sorte que les informations qui reflètent la programmation régulière et les informations qui reflètent les informations de bannières publicitaires soient affichées simultanément sur l'unité de présentation, et
si le signal d'informations de bannières publicitaires ayant été reçu contient des informations qui reflètent des informations de bannières publicitaires, ainsi que des informations audiovisuelles additionnelles, le récepteur est agencé de façon à fournir le signal de télévision numérique combiné, ayant été reçu, à une unité de présentation, et à notifier un utilisateur du fait que le signal d'informations de bannières publicitaires reçu inclut des informations audiovisuelles additionnelles, et en réaction à une saisie effectuée par l'utilisateur, les informations audiovisuelles sont agencées de façon à être visualisées, ou stockées en vue d'une visualisation ultérieure.

9. Procédé selon la revendication 8, comprenant en outre les étapes consistant à :
démoduler le signal numérique combiné ayant été reçu, et extraire des flux binaires d'un signal de programme régulier et d'un signal d'informations de bannières publicitaires à partir d'un canal réglé par l'utilisateur ;
démultiplexer le flux binaire de programme régulier et des paquets TS d'informations de bannières publicitaires à partir du signal démodulé ;
dépaqueter les paquets TS d'informations de bannières publicitaires pour fournir un signal d'informations de bannières publicitaires codées ;
décoder les informations de bannières publicitaires codées ; et
assurer le rendu des informations de bannières publicitaires codées en un signal vidéo en mode point (bitmap).

10. Procédé selon la revendication 8, comprenant en outre les étapes consistant à :
démoduler le signal numérique combiné ayant été reçu, et extraire des flux binaires d'un signal de programme régulier et d'un signal d'informations de bannières publicitaires à partir d'un canal réglé par l'utilisateur ;
démultiplexer le flux binaire de programme régulier et des paquets TS d'informations de bannières publicitaires à partir du signal démodulé ;
décoder des flux binaires codés audio et vidéo du signal de programme régulier ;
envoyer un signal de sortie audio en vue d'une transduction en son ;
reconstruire un signal vidéo de sortie à partir de la sortie vidéo décodée, et un signal qui reflète le signal d'informations de bannières publicitaires ; et
envoyer le signal vidéo de sortie au dispositif de présentation vidéo à des fins d'affichage, où le programme régulier et les informations de bannières publicitaires sont affichés simultanément

11. Procédé selon la revendication 8, l'étape de création du signal numérique combiné comprenant en outre les étapes consistant à :
coder un signal de programme régulier, et coder un signal d'informations de bannières publicitaires ;
paquétiser le signal de programme régulier codé et fournir un flux binaire paquétisé qui reflète le signal de programme régulier codé ;
paquétiser le signal d'informations de bannières publicitaires codées, et fournir un flux binaire paquétisé qui reflète le signal d'informations de bannières publicitaires codées ;
fournir un flux de transport multiplexé à partir du signal de programme régulier paquétisé et du signal d'informations de bannières publicitaires paquétisé ; et
moduler le flux de transport en signal numérique combiné, et envoyer le signal numérique combiné en vue d'une transmission sur le canal.

12. Récepteur (115 ; 315) pour un réseau de services vidéo numériques interactifs, le récepteur comprenant :
des moyens pour recevoir un signal numérique combiné, le signal numérique combiné possédant des informations qui reflètent un signal de programme régulier et d'informations de bannières publicitaires incluant des informations de bannières publicitaires ;
des moyens pour décoder (409) le signal numérique combiné, et pour fournir un premier signal qui reflète le programme régulier et un deuxième signal qui reflète les informations de bannières publicitaires ;
des moyens pour recevoir le signal qui reflète ladite au moins une publicité d'arrière-plan, et pour fournir un signal qui reflète les informations de bannières publicitaires ; et
des moyens pour fournir un signal de sortie vidéo, les moyens pour fournir le signal de sortie vidéo combinant des informations en provenance du signal qui reflète le programme régulier et du signal qui reflète les informations de bannières publicitaires ;
**caractérisé en ce que** :
si le signal d'informations de bannières publicitaires ayant été reçu contient uniquement des informations de bannières publicitaires, le récepteur (115 ; 315) est agencé de façon à présenter les informations de bannières publicitaires avec le programme régulier en simultanéité ; et
si le signal d'informations de bannières publicitaires ayant été reçu contient des informations de bannières publicitaires, ainsi que des informations audiovisuelles additionnelles, le récepteur est agencé de façon à présenter les informations de bannières publicitaires avec le programme régulier en simultanéité, et à notifier un utilisateur du fait que le signal d'informations de bannières publicitaires reçu inclut des informations audiovisuelles additionnelles, et en réaction à une saisie effectuée par l'utilisateur, les informations audiovisuelles sont agencées de façon à être visualisées, ou stockées en vue d'une visualisation ultérieure.

13. Récepteur selon la revendication 12, comprenant en outre :
une unité de démodulation de canal (401) pour démoduler le signal numérique combiné ayant été reçu, et pour extraire des flux binaires du signal de programme régulier et du signal d'informations de bannières publicitaires à partir d'un canal réglé par l'utilisateur,
une unité de démultiplexage TS (403) pour démultiplexer le flux binaire de programme régulier et des paquets TS d'informations de bannières publicitaires à partir du signal ayant été reçu de l'unité de démodulation de canal,
un dépaqueteur TS d'informations de bannières publicitaires pour recevoir les paquets TS d'informations de bannières publicitaires en provenance de l'unité de démultiplexage TS, et pour dépaqueter les paquets TS d'informations de bannières publicitaires afin de fournir un signal d'informations de bannières publicitaires codées,
une unité de rendu (404) pour assurer le décodage et le rendu des informations de bannières publicitaires codées en un signal vidéo en mode point (bitmap), une unité de reconstruction vidéo (407) pour recevoir le signal vidéo en mode point (bitmap) des informations de bannières publicitaires rendues, et pour créer une sortie destinée à un dispositif de présentation vidéo,
des décodeurs audio/vidéo (409) pour recevoir le flux binaire de programme régulier en provenance de l'unité de démultiplexage TS, les décodeurs audio/vidéo assurant le décodage de flux binaires codés audio et vidéo du signal de programme régulier, les décodeurs audio/vidéo envoyant un signal de sortie audio en vue d'une transduction en son ainsi qu'un signal vidéo décodé à une unité de reconstruction vidéo, l'unité de reconstruction vidéo reconstruisant un signal vidéo de sortie à partir de la sortie vidéo décodée, et le signal vidéo en mode point (bitmap) d'informations de bannières publicitaires rendues, l'unité de reconstruction vidéo envoyant le signal de sortie vidéo au dispositif de présentation vidéo à des fins d'affichage, où le programme régulier et les informations de bannières publicitaires sont affichés simultanément.

14. Récepteur selon la revendication 12, comprenant en outre :
une unité de démodulation de canal (401) pour démoduler le signal numérique combiné ayant été reçu, et pour extraire des flux binaires du signal de programme régulier et du signal d'informations de bannières publicitaires à partir d'un canal réglé par l'utilisateur, et
une unité de démultiplexage TS (403) pour démultiplexer le flux binaire de programme régulier et des paquets TS d'informations de bannières publicitaires à partir du signal ayant été reçu de l'unité de démodulation de canal.

15. Récepteur selon la revendication 12, comprenant en outre :
un dépaqueteur TS d'informations de bannières publicitaires pour recevoir les paquets TS d'informations de bannières publicitaires en provenance de l'unité de démultiplexage TS, et pour dépaqueter les paquets TS d'informations de bannières publicitaires afin de fournir un signal d'informations de bannières publicitaires codées, et
une unité de rendu (404) pour assurer le décodage et le rendu des informations de bannières publicitaires codées en un signal vidéo en mode point (bitmap).

16. Récepteur selon la revendication 12, comprenant en outre :
des décodeurs audio/vidéo (409) pour recevoir le flux binaire de programme régulier en provenance de l'unité de démultiplexage TS, les décodeurs audio/vidéo assurant le décodage de flux binaires codés audio et vidéo du signal de programme régulier, les décodeurs audio/vidéo (409) envoyant un signal de sortie audio en vue d'une transduction en son ainsi qu'un signal vidéo décodé à une unité de reconstruction vidéo (407), l'unité de reconstruction vidéo (407) reconstruisant un signal vidéo de sortie à partir de la sortie vidéo décodée, et un signal vidéo en mode point (bitmap) d'informations de bannières publicitaires rendues, l'unité de reconstruction vidéo envoyant le signal de sortie vidéo au dispositif de présentation vidéo à des fins d'affichage, où le programme régulier et les informations de bannières publicitaires sont affichés simultanément.
